# EUROPEAN PATENT APPLICATION

(11) **EP 3 593 972 A1**
(43) Date of publication of application: **15.01.2020**
(21) Application number: 18382508.2
(22) Date of filing: 09.07.2018
(51) Int. Cl.: B29C 35/02, B29C 73/34, B29C 70/54, B29C 70/08

(54) **PANEL STRUCTURE FOR AN AIRCRAFT AND MANUFACTURING METHOD THEREOF**

(71) Applicant: Airbus Operations, S.L., 28906 Getafe (ES)
(72) Inventor: BLANCO VARELA, Tamara, 28906 Madrid (ES); BUTRAGUEÑO MARTINEZ, Asuncion, 28906 GETAFE (ES); VAZQUEZ CASTRO, Jesus Javier, Getafe (ES); MARTIN MORENO, Zulima, 28906 GETAFE (ES)

(57) **Abstract**

The invention refers to a panel structure (1) for an aircraft comprising at least one composite layer (3, 4) and at least one carbon nanotube (CNT) paper (2) laid over the at least one composite layer (3, 4), wherein the CNT paper (2) comprises an aggregation of carbon nanotubes suitable to be heated up to the curing temperature of the panel structure (1). The CNT paper (2) can be attached between two composite layers (3, 4). Alternatively, the CNT paper (2) can be attached to a surface of one composite layer (3, 4) to form the outermost layer of the structure (1) to cure the composite layers (3,4). In this last case, the CNT paper (2) may be covered by an Alkaline Earth Silicate layer (5). The invention provides a heatable panel structure (1). In addition, the panel structure (1) configuration allows the inspection of effects of accidental damages.

## Description

### Object of the invention

The present invention refers in general to panel structures for the manufacture of an aircraft, in particular, for its fuselage, empennage section, or any other structure having any type of geometry, also for complex geometry parts having curved skin with omega or T/L shape stringers.

More in particular, it is an object of the present invention to provide a heatable panel structure for an aircraft, which is capable of reaching high temperatures to cure FRP (Fibre Reinforced Prepreg) or textile infusion structures.

It is also an object of the present invention to provide a panel structure for an aircraft, which is adapted to identify the dimension and location of any accidental damage when inspected under non-destructive testing (NDT) techniques.

The invention also refers to a method for manufacturing such a panel structure.

### Background of the invention

CNT Carbon nanotubes (CNTs) are allotropes of carbon with a cylindrical nanostructure. These cylindrical carbon molecules have unusual properties (mechanical properties, electrical conductivity, thermal conductivity...), which are valuable for nanotechnology, electronics, optics and other fields of materials science and technology. Owing to the material's exceptional strength and stiffness, nanotubes show high aspect ratio (length to diameter ratio >100, being much higher in specific cases), significantly larger than for any other material.

A buckypaper or a CNT paper is a thin self-supporting sheet made from an aggregation of carbon nanotubes. Originally, CNT papers were produced as a way to handle carbon nanotubes, but, currently they are also being studied and developed in applications in different fields, such as defense (used in vehicle and personal armors), electronics (displays), and also, in the aeronautical industry.

In the aeronautical field, bonded repairs in composite parts or structures are conventionally performed with the use of an autoclave and/or local heating means for curing the repair material.

Repairs heating up the complete part up to original curing temperature are to be avoided, as thermal deformation and damages can be produced if the part is not properly placed in its curing mould or if the curing mould is not available for the repair. Composite repairs are typically made curing the original part material in the autoclave. Additionally, the time the part (already cured) is at curing temperature has to be also controlled and reduced in order not to affect its mechanical properties.

For these reasons, if possible, local heating means are used in repairs heating up only the repair material and the area where the repair is applied.

Conventional local heating means used in bonded repairs are heating blankets and warm air boxes. However, both of these local heating means are limited in size or/and adaptability to the repair shape. Therefore, reparability of a composite part using original material (to be cured at original part temperature) is mainly limited by the heating means.

It would therefore be desirable to provide technical means that improve the bonded repairs of parts or structures whatever the size or shape of the repair area or part.

In another aspect, during the assembly process or the in-service life of an aircraft, accidental damages can be produced in external or internal parts or structures. These damages can be caused by external reasons or even during the inspection and maintenance process carried out on the aircraft.

Nowadays, these damages produced during the assembly process and the in-service operation of an aircraft are inspected by NDT methods according to the corresponding maintenance manual. Also, these damages can be visually identified, specially, during the operation of the aircraft.

Further, current NDT methods (e.g. ultrasounds) require in most of the cases direct access to the structure and disassembly of surrounding elements.

It would therefore be also desirable that the technical means used for improving the bonded repairs in parts or structures could also be used to inspect these parts or structures to evaluate the dimension and location of potential damages without the need of being close or having access to the structure.

### Summary of the invention

The present invention overcomes the above mentioned drawbacks by providing a panel structure for an aircraft that can be heated up to reaching curing temperatures for performing bonded repairs in parts or structures.

One aspect of the present invention refers to a panel structure for an aircraft that comprises at least one composite layer and at least one carbon nanotube (CNT) paper laid over the composite layer, wherein the CNT paper comprises an aggregation of carbon nanotubes suitable to be heated up to the curing temperature of the at least one composite layer.

This way, a new panel structure is provided in which the cure cycle needed for curing the structure will be applied by means of the CNT paper, due to its good thermal and electrical conductivity. The curing takes place due to the Joule effect when electrical current is applied to the structure via the CNT paper.

Further, due to the flexibility of CNT papers, the panel structure of the invention is configured to be adapted to simple and complex repair or part shapes.

Also, since the CNT paper can be locally applied, the configuration of the panel structure of the invention makes possible to locally heat up the structure when a bonded repair is to be performed.

In addition, due to the good thermal and electrical conductivity of the CNT paper, the panel structure of the invention is adapted to be inspected with the aid of a thermal camera when heated by applying electrical current. This way, the invention can be used for SHM (Structural Health Monitoring) and NDT (Non-Destructive Testing) in order to detect and characterize any accidental damage contained in the structure during its subsequent assembly process and in-service life.

This way, the panel structure of the invention can be both used as a structure for bonded repairs and for inspecting to identify potential damages suffered by the structure during its service-life and assembly process.

Further, the panel structure can be used for part manufacturing or part curing purposes when a complete heating of the part is not needed or is to be avoided.

Another aspect of the invention refers to an aircraft comprising a structure, a skin covering the structure, and a panel structure as described, wherein at least part of the structure skin includes the panel structure. Preferably, the panel structure is placed on top of the structure forming its outermost layer.

The panel structure can thus be included in any part of the aircraft, in its fuselage or empennage skin, or in any complex geometry part having flat or curved skin with omega or T/L shape stringers.

Finally, another aspect of the invention refers to a method for manufacturing a panel structure for an aircraft, comprising the steps of providing at least one layer of composite material, providing at least one carbon nanotube (CNT) paper, the CNT paper comprising an aggregation of carbon nanotubes suitable to be heated up to the curing temperature of the at least one layer of composite material when the electrical current is applied, and laying the CNT paper over the at least one composite layer to form a heatable panel structure.

The method of the invention provides a simple and cost-effective way of producing a heatable panel, capable of locally cure composite parts (without the need of an autoclave) and also capable of being inspected (SHM and NDT inspection) in order to evaluate the dimensions and location of any potential damage.

### Brief description of the drawings

For a better comprehension of the invention, the following drawings are provided for illustrative and non-limiting purposes, wherein:
Figure 1 shows a schematic perspective view of a panel structure, according to a first embodiment of the present invention.
Figure 2 shows a schematic perspective view of a panel structure, according to a second embodiment of the present invention.
Figure 3 shows a schematic perspective view of a panel structure, according to a third embodiment of the present invention.
Figure 4 shows a schematic perspective view of the arrangement of the CNT paper between two composite layers to form the panel structure of Figure 1.

### Preferred embodiments of the invention

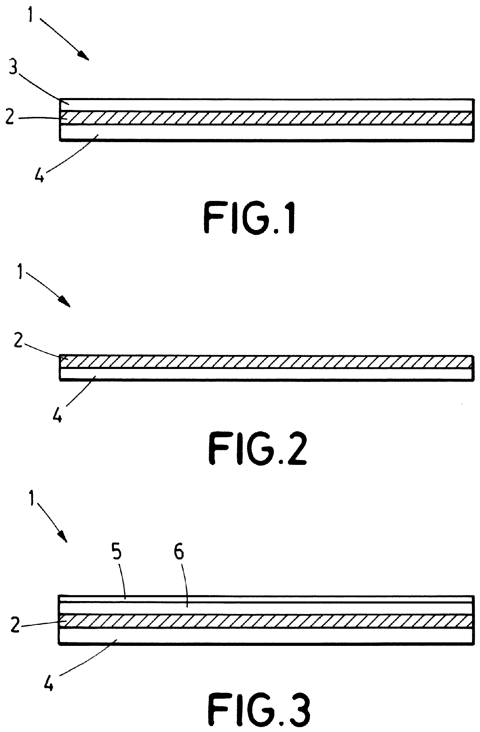

Figure 1 shows a panel structure 1 for an aircraft according to a first preferred embodiment. According to the invention, the panel structure 1 comprises at least one composite layer 3, 4 and at least one CNT paper or sheet 2 laid over the at least one composite layer 3, and wherein the CNT paper 2 comprises an aggregation of carbon nanotubes suitable to be heated up to the curing temperature of the composite layers 3, 4.

The panel structure 1 of Figure 1 comprises an outer composite layer 3, an inner composite layer 4, and a CNT paper 2 arranged between the outer and inner layers 3, 4.

The CNT paper 2 of Figure 1 is deposited between two layers of composite material 3, 4, and it is thus integrated in the panel 1. The deposition of the CNT paper 2 may be manually or automatically performed by ATL (Automated Tape Laying) or AFP (Automated Fiber Placement) in case of having a laminate skin panel (i.e. CFRP laminate).

In the embodiment of Figure 2, the CNT paper 2 is laid over an outer surface of a composite layer 4. Again, the CNT paper 2 may be manually or automatically added by ATL or AFP.

According to another preferred embodiment, the panel structure 1 further comprises an Alkaline Earth Silicate layer 5 in contact with the at least one CNT paper 2, forming the outermost layer of the panel structure 1 to avoid the loss of heat. Further, as shown in Figure 3, and according to another preferred embodiment, the panel structure 1 may further comprise a release film 6 placed between the Alkaline Earth Silicate layer 5 and the at least one CNT paper 2.

Preferably, the Alkaline Earth Silicate layer 5 has a width ranging from 0,5mm to 15mm, and preferably, from 1mm to 5 mm.

Preferably, the at least one composite layer 3, 4 of the panel structure 1 is formed by Fibre Reinforced Prepreg material.

Alternatively, the at least one composite layer 3, 4 of the panel structure 1 is formed by textile material (Non Crimp Fabric, Fabrics and tapes).

According to another preferred embodiment, the panel structure 1 may further comprise an electrical power source connected to the at least one CNT paper 2 to supply electrical power to the CNT paper 2 for curing the at least one composite layer 3, 4.

Thermal and electrical conductivity of CNT papers allow to heat up the papers up to the structure curing temperature, attaching a circuit or cable on the CNT paper 2 and applying an electrical power, by resistive heating (Joule effect).

In addition, when an accidental damage is produced, the panel structure 1 is to be NDT inspected to locate and measure the damage produced. In these structures, where at least one CNT paper is used for curing, the additional layer can be also used for SHM and NDT inspection. By applying a small electrical power to the already installed material, due to the electrical conductivity of the material, if the heating efficiency of the material is not as good as expected, it can be concluded there is damage in the CNT paper/repaired structure. Additionally, the structure is heated up homogenously in those areas where CNT paper material is not damaged and in a different manner where the CNT paper is damaged. So by using a thermal camera, areas, where CNT material/repaired structure is damaged, can be easily localized due to the different thermal behaviour considering the intact structure.

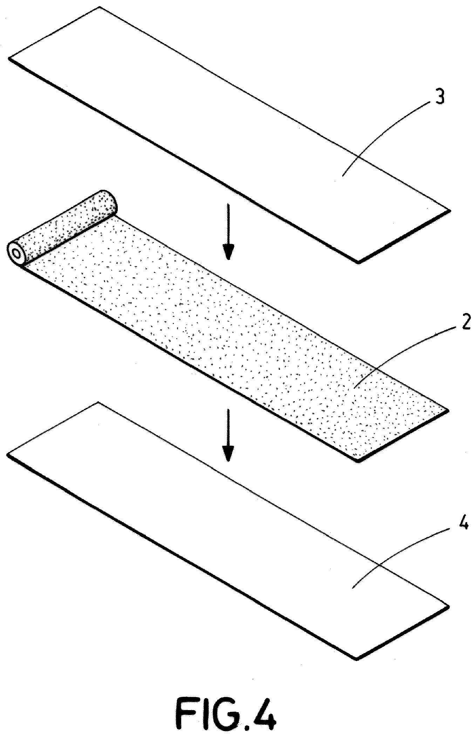

Finally, Figure 4 shows a preferred embodiment for the manufacturing method of the invention.

According to the invention, the method for manufacturing a panel structure 1 for an aircraft comprises the steps of providing at least one layer of composite material 3, providing at least one CNT paper 2, the CNT paper 2 comprising an aggregation of carbon nanotubes suitable to be heated up to the curing temperature of the panel structure 1, and attaching the CNT paper 2 to the at least one composite layer 3, 4 to form a heatable panel structure 1.

Preferably, and as shown in Figure 4, the CNT paper 2 (usually supplied in rolls) is attached to two layers of composite material 3, 4. Thus, the method comprises providing an inner 4 and an outer layer of composite material 3, providing a CNT paper 2, the CNT paper 2 comprising an aggregation of carbon nanotubes suitable to be heated up to the curing temperature of composite materials, and attaching the CNT paper 2 to the at least one composite layer 3, 4 to form a heatable panel structure 1.

## Claims

1. Panel structure (1) for an aircraft comprising at least one composite layer (3, 4) and at least one carbon nanotube (CNT) paper (2) laid over the at least one composite layer (3, 4), wherein the CNT paper (2) comprises an aggregation of carbon nanotubes suitable to be heated up to the curing temperature of the at least one composite layer (3, 4).

2. Panel structure (1) for an aircraft, according to claim 1, further comprising a electrical power source connected to the at least one CNT paper (2) to supply electrical power to the CNT paper (2) for curing the at least one composite layer (3, 4).

3. Panel structure (1) for an aircraft, according to any of the preceding claims, wherein the at least one CNT paper (2) is embedded between at least two composite layers (3, 4).

4. Panel structure (1) for an aircraft, according to any of claims 1-2, wherein the at least one CNT paper (2) is placed on top of the structure (1) forming its outermost layer.

5. Panel structure (1) for an aircraft, according to claim 4, further comprising an Alkaline Earth Silicate layer (5) on top of the at least one CNT paper (2), forming the outermost layer of the panel structure (1) to avoid the loss of heat.

6. Panel structure (1) for an aircraft, according to claim 5, further comprising a release film (6) placed between the Alkaline Earth Silicate layer (5) and the at least one CNT paper (2).

7. Panel structure (1) for an aircraft, according to any of claims 5-6, wherein the Alkaline Earth Silicate layer (5) has a width ranging from 0,5mm to 15mm, and preferably, from 1mm to 5 mm.

8. Panel structure (1) for an aircraft, according to any of the preceding claims, wherein the at least one composite layer (3, 4) is formed by Fibre Reinforced Prepreg material.

9. Panel structure (1) for an aircraft, according to any of claims 1-7, wherein the at least one composite layer (3, 4) is formed by textile material.

10. An aircraft, comprising a structure, a skin covering the structure, and a panel structure (1) according to any of the preceding claims, wherein at least part of the structure skin includes the panel structure (1).

11. Method for manufacturing a panel structure (1) for an aircraft, comprising the steps of:
providing at least one layer of composite material (3, 4),
providing at least one carbon nanotube (CNT) paper (2), the CNT paper (2) comprising an aggregation of carbon nanotubes suitable to be heated up to the curing temperature of the at least one layer of composite material (3, 4),
laying the CNT paper (2) over the at least one composite layer (3, 4) to form a heatable panel structure (1).

12. Method according to claim 11, wherein the CNT paper (2) is attached to two layers of composite material (3, 4).

13. Method according to any of claims 11-12, further comprising attaching an Alkaline Earth Silicate layer (5) on top of the at least one CNT paper (2) to form the outermost layer of the panel structure (1) in order to avoid the loss of heat.

14. Method according to claim 13, further comprising placing a release film (6) between the Alkaline Earth Silicate layer (5) and the at least one CNT paper (2).

15. Method according to any of claims 13-14, wherein the Alkaline Earth Silicate layer (5) has a width ranging from 0,5mm to 15mm, and preferably, from 1mm to 5 mm.
